# EUROPEAN PATENT SPECIFICATION

(11) **EP 3 315 109 B1**
(45) Date of publication and mention of the grant of the patent: **14.10.2020**
(21) Application number: 17157066.6
(22) Date of filing: 21.02.2017
(51) Int. Cl.: A61H 3/02, A61H 3/04

(54) **WALKER**
GEHILFE
DÉAMBULATEUR

(30) Priority: 25.01.2017 US 201715415682
(43) Date of publication of application: 02.05.2018
(73) Proprietor: Smed, Ole Falk, Calgary, AB T2J 3L1 (CA)
(72) Inventor: Smed, Ole Falk, Calgary, AB T2J 3L1 (CA)
(74) Representative: Rupprecht, Kay

(56) References cited:
- CN-U- 205 715 253
- US-A1- 2008 029 139
- US-A1- 2010 258 152
- US-A1- 2012 042 918
- US-A1- 2012 047 648
- US-B1- 7 677 259

## Description

The present invention is directed to a walker comprising two patient-load bearing support tubes.

The US 7 677 259 B1 discloses a walker of the kind defined by the features of the preamble of claim 1.

The CN 205 715 235 U discloses a ratcheting hinge a pivot mechanism, contains a base, an elastic mechanism, a pivot component, a first cam member and a second cam member, elastic mechanism movably installs on the base, the pivot component is rotationally worn to locate the base. First cam member butt in elastic mechanism just can follow the pivot component slides, first cam member can with the pivot component is with moving the rotation. The second cam member sets firmly the base and block protruding in first cam member, first cam member is being followed when the pivot component rotates with the cooperation of second cam member makes first cam member is relative the displacement of second cam member, and then force elastic mechanism warp a production elastic restoring force, elastic restoring force can drive first cam member with the second cam member resets.

### Brief Summary

The present invention provides for a walker with the features of claim 1.-

The walker according to the invention comprises a two patient-load bearing support tubes. Each patient-load bearing support tube comprises a padded underarm support for seating in the armpit of a patient, an adjustable-height load bearing tube, having a first end and a second end, wherein the second end of the adjustable-height load bearing tube is provided with a rubber tip and the first end of the adjustable-height load bearing tube is connected to the padded underarm support, the adjustable-height load bearing tube includes at least one joint. The two L-shaped legs have each leg connected at a first end to one of the patient-load bearing support tubes, each leg has a wheel disposed at a second end, and a grip disposed on the leg for a patient to grip when the walker is in use. A main tube is connected between the two legs and defining the width of the walker. The height of the patient-load bearing tubes may be adjusted from an extended position in which the padded underarm support is seated in the armpit of the patient to a retracted position in which the padded underarm support does not interfere with the patient's use of the walker. The walker further comprises a ratcheting hinge at the at least one joint in the adjustable-height load bearing tube. The ratcheting hinge comprises a shaft having a first spacer-retaining end and a second threaded end; first and second cylindrical spacers, each of the cylindrical spacers having an axial bore there through and a first end having a groove disposed thereon and a second non-grooved end. A pair of mating gears are provided, each of the mating gears has an axial bore there through and a first gear surface and an opposing second rear surface. The first gear surface of one of the mating gears engages with the first gear surface of the opposing mating gear, and the second rear surface of each of the mating gears has a key disposed thereon. The shaft passes through the axial bores of the first and second cylindrical spacers and the pair of mating gears and the first cylindrical spacer is in contact with the spacer-retaining end of the shaft and the keys on the second rear surface of each mating gear are aligned and engaged with the grooves disposed on the first end of each of the first and second cylindrical spacers. A spring is disposed on the shaft and mating with the second non-grooved end of the second cylindrical spacer; a washer disposed on the shaft and in contact with the spring and a nut engaged with the second threaded end of the shaft; by tightening the nut on the second threaded end of the shaft compresses the spring and thereby compresses together the first and second cylindrical spacers and the pair of mating gears; and the rotation of the ratcheting hinge is constrained to discrete ratcheting steps by the interaction of the opposing gear surfaces.

### Brief Description of the Drawings

FIG. 1 is a perspective view of an embodiment of the walker.
FIGS. 2a, 2b and 2c are side views of an embodiment of the walker showing the height adjustability of the walker.
FIGS. 3a and 3b are a partially exploded and assembled view, respectively, of a ratcheting hinge assembly used in an embodiment of the walker.
FIG. 4 is a close-up view of the height-adjustable load bearing tube, showing the mechanism of height adjustment.

### Detailed Description of the Drawings

Embodiments of a walker are shown and described. Generally, the walker comprises two patient-load bearing support tubes, each patient-load bearing support tube comprising a padded underarm support for seating in the armpit of a patient, an adjustable-height load bearing tube, having a first end and a second end, wherein the first end of the adjustable-height load bearing tube is connected to the padded underarm support and the second end of the adjustable-height load bearing tube is provided with a rubber tip; two L-shaped legs, each leg connected at a first end to one of the patient-load bearing support tubes, wherein each leg has a wheel disposed at the second end, and a grip disposed on the leg for a patient to grip when the walker is in use; and a main tube connected between the two legs and defining the width of the walker; wherein the height of the patient-load bearing tubes may be adjusted from an extended position in which the padded underarm support is seated in the armpit of the patient to a retracted position in which the padded underarm support does not interfere with the patient's use of the walker.

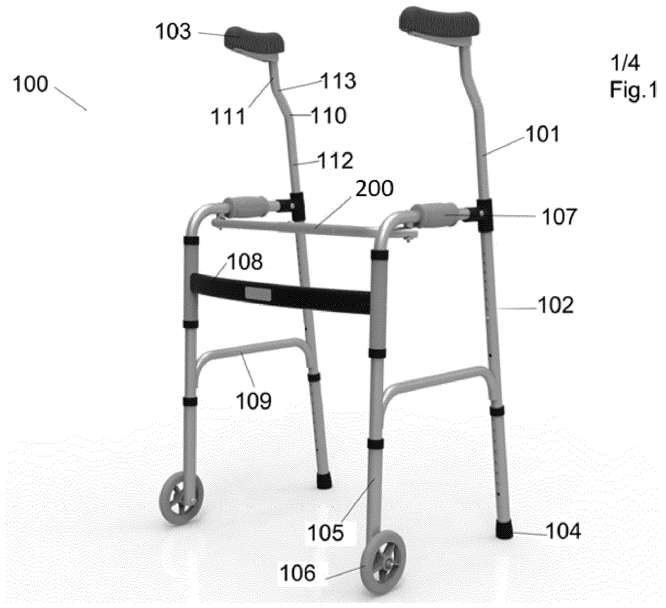

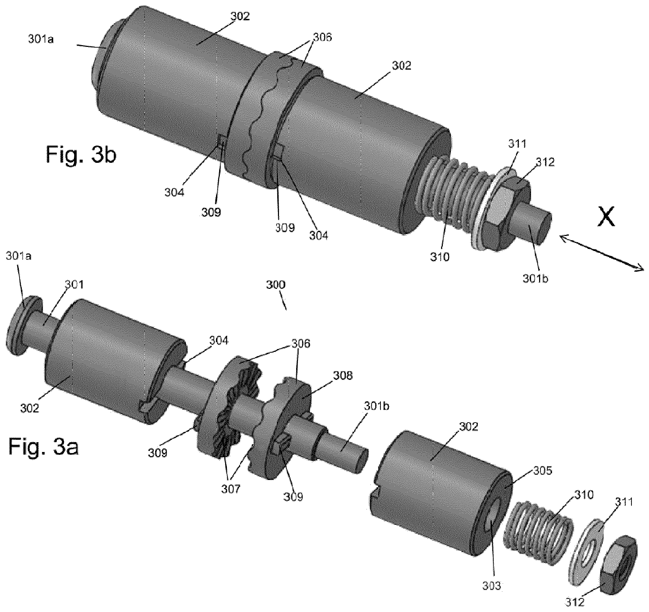

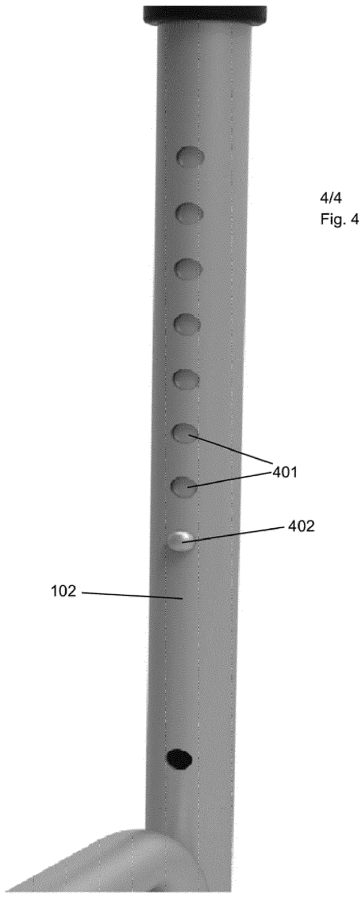

Fig. 1 shows a perspective view of an embodiment of the walker 100. As can be seen in Fig. 1, the walker 100 is provided with a patient-load bearing support tube 101. The patient load-bearing support tube 101 is made up of an adjustable-height load bearing tube 102, a padded underarm support 103 and a rubber tip 104. The adjustable-height load bearing tube 102 allows for the adjustment of the height of the padded underarm support 103, so that the padded underarm support 103 may be seated in the armpit of a patient. The adjustable-height load bearing tube 102 may take the form of two concentric tubes, one being a fixed bottom portion and the other being an extendible portion extending out of the fixed bottom portion. As can best be seen in FIG. 4 which is a close-up view of the adjustable height load bearing tube 102, the position of the adjustable-height load bearing tube 102 may be adjustable by means of a spring-loaded pin 402 extending through the extendible portion and engaged a the hole 401 in the fixed bottom portion. As can be seen in Fig. 4, a plurality of holes 401 are provided to allow for different heights to be selected by the user. Alternatively, the height of the adjustable-height load bearing tube 102 may adjusted by a friction fit, i.e. fastening between two parts which is achieved by friction after the parts are pushed together, rather than by any other means of fastening, between the two concentric tubes. Other mechanisms for adjusting the height of the tube are known in the art and within the scope of the invention. The padded underarm support 103 may be made of foam, plastic or other materials known in the art, and may be covered by cloth, fabric, leather or other upholstery materials as needed in any particular application. It should be appreciated by one of ordinary skill in the art that the hardness or softness of the padded underarm support 103 can be varied to meet, for example, the needs of a particular patient. The rubber tip 104, aids the use of the walker by providing a non-skid surface when the end of the patient-load bearing support tube is in contact with a walking surface. Joint 110 allows a ratcheting hinge to be disposed inside the patient load bearing support tube 101, so that the angle of padded underarm support 103 may be adjusted. The mechanism of the ratcheting hinge will be discussed in greater detail in connection with the discussion of Figs. 3a and 3b.

Also provided in the walker 100 are legs 105. As can been seen in Fig. 1, one end of the legs 105 are connected to the patient-load bearing support tube 101. Disposed at an opposite end of the legs 105 is the wheel 106. Wheel 106 also aids in the use of the walker by allowing the walker frame to glide smoothly on the walking surface when the patient pushes the walker forward. The length of the legs 105 may be adjustable, to accommodate patients of differing heights. Such adjustments may be accomplished by the means disclosed above in connection with adjustability of the adjustable-height load bearing tube 102 or other means for adjustment known in the art. The legs 105 are provided with a grip 107, which the patient grips during use of the walker. One of ordinary skill in the art will appreciate that the grip 107 may again be made of foam, plastic or other materials known in the art, and may optionally be covered by cloth, fabric, leather or other upholstery materials as needed in any particular application. Optionally, intermediate leg supports 109 can be provided to further stabilize the legs and increase their weight bearing capacity.

The width of the walker 100 is defined by the main tube 108. As can be seen in Fig. 1, the main tube 108 is connected between the two legs 105. The main tube is rigidly connected to the two legs 105, and may be connected by any means known in the art, for example by welding, rivets, screws or by making the legs 105 and the main tube 108 from a single contiguous piece of material. Optionally, an additional support member 200 can be connected between the legs 105 to provide additional support for the main tube 108, and further stabilizing the connection between the legs 105.

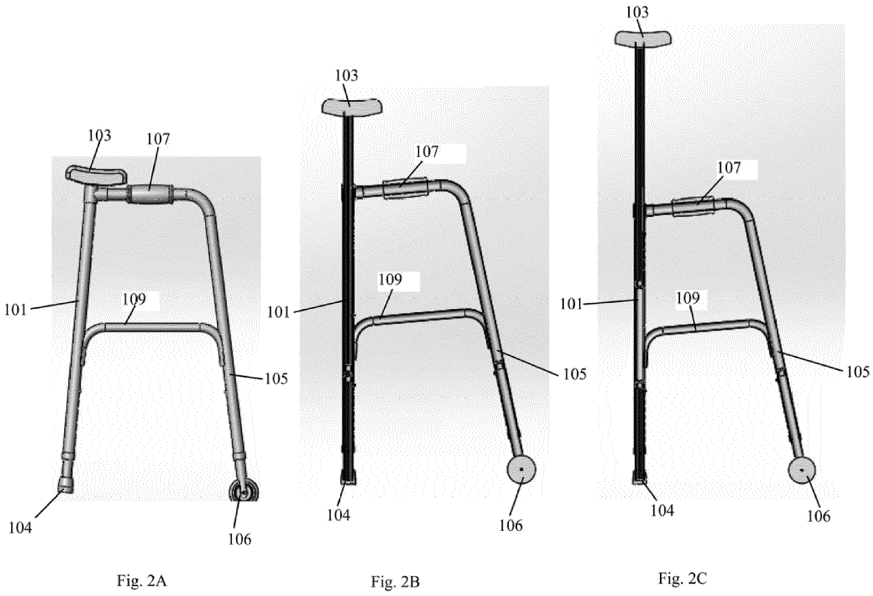

Figs. 2a, 2b and 2c show the height adjustability of the walker 100. Like numerals will be used to point out features in Figs. 2a-c as were used in the description of those features in the description of Fig. 1. Thus, in Fig. 2a-c, the walker 100 is provided with the patient-load bearing support tube 101, the padded underarm support 103 and the rubber tip 104. Also provided in the walker 100 are legs 105 with the wheel 106 and the grip 107 and intermediate leg supports 109. As can be seen in Fig 2a, the patient-load bearing support tube 101 is in a retracted position. In this position, the padded underarm support 103 does not interfere with the patient's use of the walker. In Fig 2b, the patient-load bearing support tube is shown in an intermediate position. In this position, the padded underarm support 103 may be seated in the armpit of a patient of shorter stature. Alternatively, a patient may rest his or her arms on the padded underarm support 103, without seating the padded underarm support in his or her armpit. Finally, in Fig. 2c, the patient-load bearing support tube is shown in a fully extended position. In this position, the padded underarm support 103 will be seated in the armpit of the patient. In this way, the patient can take advantage of the support provided by the patient-load bearing support tube while also using the walker to assist in their mobility.

Figs. 3a and 3b show a partially exploded view and an assembled view of the ratcheting hinge assembly used in embodiments of the walker. As can be seen best in the partially exploded view of Fig. 3a, the ratcheting hinge assembly 300 has a shaft 301 having a first spacer-retaining end 301a and a second threaded end 301b. Also included in the ratcheting hinge assembly are first and second cylindrical spacers 302. Each of the cylindrical spacers 302 having an axial bore 303 there through and a first end having a groove 304 disposed thereon and a second non-grooved end 305.

A pair of mating gears 306 are also provided in the ratcheting hinge assembly. Each of the mating gears 306 has an axial bore there through such that they can be disposed on the shaft 301. Each of the mating gears 306 has a first gear surface 307 and an opposing second rear surface 308. As can be best seen in the assembled view of Fig. 4, the first gear surface 307 of one of the mating gears 306 engages with the first gear surface 307 of the opposing mating gear 306. The second rear surface 308 of each of the mating gears 306 has a key 309 disposed thereon.

With reference again to the assembled view of Fig. 3b, the shaft 301 passes through the axial bores 303 of the first and second cylindrical spacers 302 and the pair of mating gears 306. The first cylindrical spacer 302 is in contact with the spacer-retaining end 301a of the shaft 301 and the keys 309 on the second rear surface 308 of each mating gear 306 are aligned and engaged with the grooves 304 disposed on the first end of each of the first and second cylindrical spacers 302. A spring 310 is disposed on the shaft 301 and mating with the second non-grooved end 305 of the second cylindrical spacer 302. A washer 311 is also disposed on the shaft and in contact with the spring 310 and a nut 312 is engaged with the second threaded end 301b of the shaft 301. Tightening the nut 312 on the second threaded end 301b of the shaft 301 compresses the spring 310 and thereby compresses together the first and second cylindrical spacers 302 and the pair of mating gears 306. The ratcheting hinge 300 allows for rotation in the direction R marked in Fig. 3b, but the rotation is constrained to discrete ratcheting steps by the interaction of the opposing gear surfaces 307.

When assembled in the walker, the ratcheting hinge 300 is disposed inside the joint 110 of the patient load bearing support tube 101. The joint 110 provided in the patient load bearing support tube 101 allows a first one of the spacer 302 and associated gear 306 to be inserted in an upper portion 111 of the patient load bearing support tube 101 and the second spacer 302 and associated gear 306 to be inserted in a lower portion 112 of the patient load bearing support tube 101. The interface of the gear surfaces 307 is at the joint 110, such that the upper portion 111 may be rotated relative to the lower portion 112. Optionally, an additional joint 113 may be provided in the patient load bearing support tube 101, to accommodate a second ratcheting hinge 300. The inclusion of this additional joint 113 allows for further articulation of the padded under arm support 103.

It will be appreciated by those of ordinary skill in the art that, while the forgoing disclosure has been set forth in connection with particular embodiments and examples, the disclosure is not intended to be necessarily so limited, and that numerous other embodiments, examples, uses, modifications and departures from the embodiments, examples and uses described herein are intended to be encompassed by the claims attached hereto. Various features of the disclosure are set forth in the following claims.

## Claims

1. A walker (100) comprising:
two patient-load bearing support tubes (101), each patient-load bearing support tube (101) comprising
- a padded underarm support (103) for seating in the armpit of a patient,
- an adjustable-height load bearing tube (102), having a first end and a second end, wherein the second end of the adjustable-height load bearing tube (102) is provided with a rubber tip (104) and the first end of the adjustable-height load bearing tube (102) is connected to the padded underarm support (103), wherein the adjustable height load bearing tube (102) includes at least one joint (110);
- two L-shaped legs (105), each leg connected at a first end to one of the patient-load bearing support tubes (101), wherein each leg has a wheel (106) disposed at a second end, and a grip (107) disposed on the leg for a patient to grip (107) when the walker (100) is in use;
- a main tube (108) connected between the two legs (105) and defining the width of the walker (100);
- wherein the height of the patient-load bearing tubes may be adjusted from an extended position in which the padded underarm support (103) is seated in the armpit of the patient to a retracted position in which the padded underarm support (103) does not interfere with the patient's use of the walker (100),
**characterized by** a ratcheting hinge (300) inside the joint (110) of a lower portion (111) and an upper portion (112) of the patient-load bearing support tube (101) disposed so that the angle of the padded underarm support (103) may be adjusted by rotating the upper portion (111) relative to the lower portion (112).

2. The walker (100) of claim 1, wherein the ratcheting hinge (300) comprises:
a shaft (301) having a first spacer-retaining end (301a) and a second threaded end (301b);
first and second cylindrical spacers, each of the cylindrical spacers having an axial bore (303) there through and a first end having a groove disposed thereon and a second non-grooved end (305);
a pair of mating gears (306), each of the mating gears (306) having an axial bore (303) there through and a first gear surface (307) and an opposing second rear surface (308), wherein the first gear surface (307) of one of the mating gears (306) engages with the first gear surface (307) of the opposing mating gear (306), and wherein the second rear surface (308) of each of the mating gears (306) has a key (309) disposed thereon;
wherein the shaft (301) passes through the axial bores (303) of the first and second cylindrical spacers and the pair of mating gears (306) and wherein the first cylindrical spacer is in contact with the spacer-retaining end (301a) of the shaft (301) and the keys (309) on the second rear surface (308) of each mating gear (306) are aligned and engaged with the grooves (304) disposed on the first end of each of the first and second cylindrical spacers; and
a spring (310) disposed on the shaft (301) and mating with the second non-grooved end (305) of the second cylindrical spacer;
a washer disposed on the shaft (301) and in contact with the spring (310) and a nut (312) engaged with the second threaded end of the shaft (301);
wherein tightening the nut (312) on the second threaded end of the shaft (301) compresses the spring (310) and thereby compresses together the first and second cylindrical spacers and the pair of mating gears (306); and
wherein the rotation of the ratcheting hinge (300) is constrained to discrete ratcheting steps by the interaction of the opposing gear surfaces.

3. The walker (100) of claim 1 further comprising two intermediate leg supports (109), each of the leg supports (109) connected between the legs (105) and the patient-load bearing support tubes (101).

4. The walker (100) of claim 1 further comprising at least one additional support member disposed between the leg members to provide additional support for the main tube (108).

5. The walker (100) of claim 1, wherein the length of the legs (105) is adjustable.

6. The walker (100) of claim 1, wherein the height of the adjustable-height load bearing tube (102) is adjusted by a spring-loaded pin (402) extending through an extendible portion and engaged with a hole (401) in a fixed bottom portion.

7. The walker (100) of claim 1, wherein the height of the adjustable-height load bearing tube (102) is adjusted by a friction fit between two portions of the adjustable-height load bearing tube (102).

8. The walker (100) of claim 1, wherein the padded underarm support (103) is comprised of foam or plastic.

9. The walker (100) of claim 7, wherein the padded underarm support (103) is covered by cloth, fabric, leather or other upholstery materials.

10. The walker (100) of claim 1, wherein the hardness of the padded underarm support (103) is variable.

11. The walker (100) of claim 1, wherein the grip (107) is comprised of foam or plastic.

12. The walker (100) of claim 11, wherein the grip (107) is covered by cloth, fabric, leather or other upholstery materials.

13. The walker (100) of claim 1, wherein a further ratcheting hinge (300) is provided inside an additional joint (110) of a lower portion (111) and an upper portion (112) of the patient-load bearing support tube (101) to allow for further articulation of the padded under arm support (103).

## Patentansprüche

1. Gehhilfe (100), umfassend:
zwei Patientengewicht tragende Stützrohre (101), wobei jedes Patientengewicht tragende Stützrohr (101) aufweist:
- eine gepolsterte Unterarmstütze (103) zur Aufnahme in der Achsel eines Patienten,
- ein höhenverstellbares, tragendes Rohr (102) mit einem ersten Ende und einem zweiten Ende, wobei das zweite Ende des höhenverstellbaren, tragenden Rohrs (102) mit einer Gummispitze (104) versehen ist und das erste Ende des höhenverstellbaren, tragenden Rohrs (102) mit der gepolsterten Unterarmstütze (103) verbunden ist, wobei das höhenverstellbare, tragende Rohr (102) mindestens ein Gelenk (110) enthält;
- zwei L-förmige Schenkel (105), wobei jeder Schenkel an einem ersten Ende mit einem der Patientengewicht tragenden Stützrohre (101) verbunden ist, wobei jeder Schenkel ein an einem zweiten Ende angeordnetes Rad (106) und einen an dem Schenkel angeordneten Griff für einen Patienten zum Greifen (107), wenn die Gehhilfe (100) in Gebrauch ist, aufweist;
- ein Hauptrohr (108), das zwischen den zwei Schenkeln (105) verbunden ist und die Breite der Gehhilfe (100) bildet;
- wobei die Höhe der Patientengewicht tragenden Rohre eingestellt werden kann von einer ausgezogenen Position, in der die gepolsterte Unterarmstütze (103) in der Achsel des Patienten aufgenommen ist, in eine eingezogene Position, in der die gepolsterte Unterarmstütze (103) den Gebrauch der Gehhilfe (100) durch den Patienten nicht behindert,
**gekennzeichnet durch** ein Rasterscharnier (300) im Innern des Gelenks (110) eines tieferen Abschnitts (111) und eines höheren Abschnitts (112) des Patientengewicht tragenden Stützrohrs (101), das so angeordnet ist, dass der Winkel der gepolsterten Unterarmstütze (103) durch Drehen des höheren Abschnitts (111) bezüglich des tieferen Abschnitts (112) eingestellt werden kann.

2. Gehhilfe (100) nach Anspruch 1, wobei das Rasterscharnier (300) umfasst:
einen Schaft (301) mit einem das erste Distanzstück sichernden Ende (301a) und einem zweiten Einschraubende (301b);
erste und zweite zylindrische Distanzstücke, wobei jedes der zylindrischen Distanzstücke eine axiale Durchgangsbohrung (303) und ein erstes Ende mit einer daran angeordneten Nut und ein zweites Ende (305) ohne Nut aufweist;
ein Paar von Gegenrädern (306), wobei jedes der Gegenräder (306) eine axiale Durchgangsbohrung (303) und eine erste Verzahnungsfläche (307) und eine entgegengesetzte zweite Rückfläche (308) aufweist, wobei die erste Verzahnungsfläche (307) eines der Gegenräder (306) mit der ersten Verzahnungsfläche (307) des gegenüberliegenden Gegenrades (306) in Eingriff kommt, und wobei die zweite Rückfläche (308) jedes der Gegenräder (306) eine daran angeordnete Passfeder (309) aufweist;
wobei der Schaft (301) durch die axialen Bohrungen (303) des ersten und des zweiten zylindrischen Distanzstücks und des Paars von Gegenrädern (306) hindurchgeht und wobei das erste zylindrische Distanzstück mit dem das Distanzstück sichernden Ende (301a) des Schaftes (301) in Kontakt sich befindet, und die Passfedern (309) an der zweiten Rückfläche (308) jedes Gegenrades (306) mit den Nuten (304) ausgerichtet und in Eingriff gebracht sind, die am ersten Ende jedes des ersten und des zweiten zylindrischen Distanzstücks angeordnet sind; und
eine Feder (310), die an dem Schaft (301) angeordnet ist und mit dem zweiten Ende (305) ohne Nut des zweiten zylindrischen Distanzstücks zusammenpasst;
eine Unterlegscheibe, die auf dem Schaft (301) angeordnet ist und sich in Kontakt befindet mit der Feder (310) und einer Mutter (312), die mit dem zweiten Einschraubende des Schaftes (301) im Eingriff ist,
wobei das Anziehen der Mutter (312) am zweiten Einschraubende des Schaftes (301) die Feder (310) zusammendrückt und dadurch das erste und das zweite zylindrische Distanzstück und das Paar von Gegenrädern (306) zusammendrückt; und
wobei die Drehung des Rasterscharniers (300) durch das Zusammenspiel der gegenüberliegenden Verzahnungsflächen auf getrennte Rasterstufen eingeschränkt ist.

3. Gehhilfe (100) nach Anspruch 1, die des Weiteren zwei dazwischen liegende Schenkelhalterungen (109) umfasst, wobei jede der Schenkelhalterungen (109) zwischen den Schenkeln (105) und den Patientengewicht tragenden Stützrohren (101) verbunden ist.

4. Gehhilfe (100) nach Anspruch 1, die des Weiteren mindestens ein zusätzliches Stützelement umfasst, das zwischen den Schenkelelementen angeordnet ist, um eine zusätzliche Halterung für das Hauptrohr (108) bereitzustellen.

5. Gehhilfe (100) nach Anspruch 1, wobei die Länge der Schenkel (105) einstellbar ist.

6. Gehhilfe (100) nach Anspruch 1, wobei die Höhe des höhenverstellbaren, tragenden Rohrs (102) durch einen federbelasteten Stift (402) eingestellt wird, der sich durch einen ausziehbaren Abschnitt erstreckt und mit einer Bohrung (401) in einem befestigten unteren Abschnitt in Eingriff gebracht wird.

7. Gehhilfe (100) nach Anspruch 1, wobei die Höhe des höhenverstellbaren, tragenden Rohrs (102) durch eine Presspassung zwischen zwei Abschnitten des höhenverstellbaren, tragenden Rohrs (102) eingestellt wird.

8. Gehhilfe (100) nach Anspruch 1, wobei die gepolsterte Unterarmstütze (103) aus Schaumstoff oder Kunststoff besteht.

9. Gehhilfe (100) nach Anspruch 7, wobei die gepolsterte Unterarmstütze (103) durch Stoff, Gewebe, Leder oder andere Polsterungsmaterialien überzogen ist.

10. Gehhilfe (100) nach Anspruch 1, wobei die Härte der gepolsterten Unterarmstütze (103) veränderlich ist.

11. Gehhilfe (100) nach Anspruch 1, wobei der Griff (107) aus Schaumstoff oder Kunststoff besteht.

12. Gehhilfe (100) nach Anspruch 11, wobei der Griff (107) durch Stoff, Gewebe, Leder oder andere Polsterungsmaterialien überzogen ist.

13. Gehhilfe (100) nach Anspruch 1, wobei ein weiteres Rasterscharnier (300) im Innern eines zusätzlichen Gelenks (110) eines tieferen Abschnitts (111) und eines höheren Abschnitts (112) des Patientengewicht tragenden Stützrohrs (101) vorgesehen ist, um eine weitere Beweglichkeit der gepolsterten Unterarmstütze (103) zu gewährleisten.

## Revendications

1. Déambulateur (100) comprenant :
- deux tubes de support portant une charge de patient (101), chaque tube de support portant une charge de patient (101) comprenant
- un support d'avant-bras rembourré (103) destiné à reposer dans l'aisselle d'un patient,
- un tube portant une charge à hauteur ajustable (102), ayant une première extrémité et une seconde extrémité, dans lequel la seconde extrémité du tube portant une charge à hauteur ajustable (102) est dotée d'un bout en caoutchouc (104) et la première extrémité du tube portant une charge à hauteur ajustable (102) est connectée au support d'avant-bras rembourré (103), dans lequel le tube portant une charge à hauteur ajustable (102) inclut au moins un joint (110) ;
- deux jambes en forme de L (105), chaque jambe étant connectée au niveau d'une première extrémité à un des tubes de support portant une charge de patient (101), dans lequel chaque jambe a une roue (106) disposée au niveau d'une seconde extrémité, et une poignée (107) disposée sur la jambe pour être agrippée par un patient (107) quand le déambulateur (100) est en utilisation ;
- un tube principal (108) connecté entre les deux jambes (105) et définissant la largeur du déambulateur (100) ;
- dans lequel la hauteur des tubes portant une charge de patient peut être ajustée depuis une position en extension dans laquelle le support d'avant-bras rembourré (103) repose dans l'aisselle du patient jusqu'à une position rétractée dans laquelle le support d'avant-bras rembourré (103) n'interfère pas avec l'utilisation du déambulateur (100) par le patient,
**caractérisé par** une charnière à encliquetage (300) à l'intérieur du joint (110) d'une portion inférieure (111) et d'une portion supérieure (112) du tube de support portant une charge de patient (101) disposée de sorte que l'angle du support d'avant-bras rembourré (103) peut être ajusté par rotation de la partie inférieure (111) relativement à la portion supérieure (112).

2. Déambulateur (100) selon la revendication 1, dans lequel la charnière à encliquetage (300) comprend :
un arbre (301) ayant une première extrémité de retenue d'espacement (301a) et une seconde extrémité à pas de vis (301b);
un premier et un second espaceur cylindrique, chacun des espaceurs cylindriques ayant un perçage axial (303) à travers lui-même et une première extrémité ayant une rainure disposée sur elle-même et une seconde extrémité non rainurée (305) ;
une paire d'engrenages appariés (306), chacun des engrenages appariés (306) ayant un perçage axial (303) à l'intérieur de lui-même et une première surface d'engrenage (307) et une seconde surface arrière opposée (308), dans lequel la première surface d'engrenage (307) d'un des engrenages appariés (306) s'engage avec la première surface d'engrenage (307) de l'engrenage apparié opposé (306), et dans lequel la seconde surface arrière (308) de chacun des engrenages appariés (306) a une clavette (309) disposée sur elle-même ;
dans lequel l'arbre (301) passe à travers les perçages axiaux (303) du premier et du second espaceur cylindrique et de la paire d'engrenages appariés (306), et dans lequel le premier espaceur cylindrique est en contact avec l'extrémité de retenue d'espacement (301a) de l'arbre (301), et les clavettes (309) sur la seconde surface arrière (308) de chaque engrenage apparié (306) sont alignées et engagées avec les rainures (304) disposées sur la première extrémité de chacun du premier et du second espaceur cylindrique ; et
un ressort (310) disposé sur l'arbre (301) et s'appariant avec la seconde extrémité non rainurée (305) du second espaceur cylindrique ;
une rondelle disposée sur l'arbre (301) et en contact avec le ressort (310), et un écrou (312) engagé avec la seconde extrémité à pas de vis de l'arbre (301);
dans lequel le fait de serrer l'écrou (312) sur la seconde extrémité à pas de vis de l'arbre (301) comprime le ressort (310) et ainsi comprime conjointement le premier et le deuxième espaceur cylindrique et la paire d'engrenages appariés (306) ; et
dans lequel la rotation de la charnière à encliquetage (300) est restreinte à des sauts d'encliquetage discrets par l'interaction des surfaces d'engrenage apparié opposées.

3. Déambulateur (100) selon la revendication 1, comprenant en outre deux supports de jambe intermédiaires (109), chacun des supports de jambe (109) étant connecté entre les jambes (105) et les tubes de support portant une charge de patient (101).

4. Déambulateur (100) selon la revendication 1, comprenant en outre au moins un élément de support additionnel disposé entre les éléments de jambe pour assurer un support additionnel pour le tube principal (108).

5. Déambulateur (100) selon la revendication 1, dans lequel la longueur des jambes (105) est ajustable.

6. Déambulateur (100) selon la revendication 1, dans lequel la hauteur du tube portant une charge à hauteur ajustable (102) est ajustée par une broche chargée par ressort (402) s'étendant à travers une portion extensible et engagée avec un trou (401) dans une portion de fond fixe.

7. Déambulateur (100) selon la revendication 1, dans lequel la hauteur du tube portant une charge à hauteur ajustable (102) est ajustée par un ajustement par friction entre deux portions du tube portant une charge à hauteur ajustable (102).

8. Déambulateur (100) selon la revendication 1, dans lequel le support d'avant-bras rembourré (103) est constitué de mousse ou de matière plastique.

9. Déambulateur (100) selon la revendication 7, dans lequel le support d'avant-bras rembourré (103) est recouvert d'étoffe, de tissu, de cuir ou d'autres matériaux de rembourrage.

10. Déambulateur (100) selon la revendication 1, dans lequel la dureté du support d'avant-bras rembourré (103) est variable.

11. Déambulateur (100) selon la revendication 1, dans lequel la poignée (107) est constituée de mousse ou de matière plastique.

12. Déambulateur (100) selon la revendication 11, dans lequel la poignée (107) est recouverte d'étoffe, de tissu, de cuir ou d'autres matériaux de rembourrage.

13. Déambulateur (100) selon la revendication 1, dans lequel une charnière à encliquetage supplémentaire (300) est prévue à l'intérieur d'un joint additionnel (110) d'une portion inférieure (111) et d'une portion supérieure (112) du tube de support portant une charge de patient (101) pour permettre une articulation supplémentaire du support d'avant-bras rembourré (103).
